# EUROPEAN PATENT APPLICATION

(11) **EP 3 360 420 A1**
(43) Date of publication of application: **15.08.2018**
(21) Application number: 18382067.9
(22) Date of filing: 08.02.2018
(51) Int. Cl.: A23C 20/02

(54) **POWDER COMPOSITION FOR PREPARING DAIRY-FREE CHEESE**

(30) Priority: 13.02.2017 ES 201730168
(71) Applicant: Desarrollos y Promociones Vegetarianas, S.L., 28770 Colmenar Viejo (ES)
(72) Inventor: TEDESCO, Laura, 28770 Colmenar Viejo (ES)
(74) Representative: Gallego Jiménez, José Fernando

(57) **Abstract**

The present invention relates to a powder composition for preparing dairy-free cheese. This composition comprises a combination of legume protein, hydroxypropylated starch phosphate, tapioca flour, carrageenan, locust bean gum and lactic acid. It also relates to a package comprising this composition, to its use for preparing dairy-free cheese, to a process for preparing dairy-free cheese, to the dairy-free cheese comprising the composition of the invention, and to a food product comprising this dairy-free cheese.

## Description

### Technical field

The present invention relates to compositions alternative to dairy products with a high protein content, wherein products of plant origin are used.

### State of the art

Cheese is a food very widespread among the population, whose appearance in the diet may be dated from the beginning of the domestication of animals. This product comes from the coagulation of milk through the use of rennet or other enzymes, and the subsequent separation of the whey. Cheese exhibits infinity of different tastes, since it can be prepared from different types of milk (cow, sheep, buffalo, goat, etc.) and through different maturing processes.

Cheese is a popular food rich in proteins, fats, calcium, and vitamins (A, K and B), though it is not appropriate for those persons who have intolerance to dairy products, high cholesterol levels, and for those who practice veganism, that is, those who refrain from eating and using products of animal origin and adopt a lifestyle based on respect for animals.

The commercialization of cheese substitutes prepared from raw materials of non-animal origin is succeeding due to the growing awareness towards the reduction of the consumption of fats and proteins of animal origin, since the products of plant origin are considered healthier due to their low content in saturated fats and because they are cholesterol-free. Moreover, their production is easier and cheaper compared to the manufacture of cheese from dairy products. However, the preparation of such substitutes encounters technical difficulties to achieve the functional, organoleptic and nutritional characteristics of the cheese, such as, for example, the texture, the firmness, the taste, the ability to melt and stretch, and to maintain the functional characteristics with high protein content.

In general, the compositions described in the state of the art are complex and require the combination of various components to achieve products with functional characteristics similar to those of cheese derived from milk, and which are accepted by the consumer. The challenges are even greater in the case of the complete replacement of casein, the major component of cheese, which takes place in dairy-free cheeses.

Among the different technical solutions for obtaining dairy-free cheese that have been described in the state of the art, the following can be mentioned.

In the US patent US5807601 a cheese imitation composition is described, which comprises between 3% and 30% of granular starch, between 20% and 60% of water, between 0.5% and 25% of carbohydrates other than starch, between 0.5% and 5% of hydrocolloid stabilizers, and less than 2% of protein.

In the international patent application WO-A-03/00062 an imitation cheese product is described, which comprises water, coconut oil, carrageenan, cellulose gel, titanium dioxide, maltodextrin, agar, pectin, glucono-8-lactone, sodium chloride and aromas.

In the European patent application EP-A-2449888 an imitation of cheese without protein is described, which comprises a combination of fluidized and stabilized potato starch and pea starch, sodium chloride, water, citric acid, vegetable fat, aroma and colorants.

The international patent application WO-A-2010/091834 discloses cheese compositions free of dairy products without protein comprising water, hydrogenated vegetable oil (coconut or palm kernel), porous starch, sodium octenyl succinate starch, locust bean gum, carrageenan, citric acid, colorant and sodium chloride.

In the international patent application WO-A-2013/138728 a powder mixture for preparing dairy-free cheese is described, comprising oxidized starch, starch sodium octenyl succinate, sodium chloride, disodium phosphate, sodium aluminium phosphate, calcium sulphate, potassium sorbate, sorbic acid, titanium dioxide, lecithin, xanthan gum, locust bean gum, guar gum, and citric acid. The process for preparing the cheese from the powdery composition comprises the combination with water and oil, a cooking step and subsequent cooling in a mould. In this document, the organoleptic and functional properties of the obtained cheese are not described.

In the international patent application WO-A-2014/085250 powdered mixtures which are used to prepare dairy-free cheese are described, which comprise a combination of native starch, acid-treated starch, hydroxypropylated starch phosphate, starch sodium octenyl succinate, acetylated starch, starch adipate, xanthan gum, locust bean gum, guar gum, carrageenan, tricalcium phosphate, trisodium phosphate, sodium chloride, sorbic acid, citric acid, colorant and aroma. The mixture is combined with water and fat at a temperature comprised between 60° C and 80° C and it is left to cool. The organoleptic properties of the obtained cheese are not described.

In the international patent application WO-A-2016/189389 a dairy-free cheese having low fat content, comprised between 8% and 12%, and a protein content comprised between 3% and 5% is described.

The mozzarella cheese substitute is one of the most popular in the market and there are several alternatives available. For example, the product Teese Mozzarella (www.meddiet.com) comprises water, tapioca starch, coconut oil and/or sunflower oil, tapioca maltodextrin, pea protein, carrageenan, lactic acid, aromas, and titanium dioxide. On the other hand, Daiya Mozzarella (http://daiyafoods.com/) comprises water, tapioca or maranta flour, canola or safflower oil, coconut oil, pea protein, sodium chloride, aromas, inactive yeast, glycerine, xanthan gum, citric acid, and titanium dioxide. Vegan Gourmet Mozzarella (http://www.fooducate.com/) comprises water, palm oil, modified starch, aromas, pea fibre, pea protein, bamboo fibre, calcium phosphate, rice flour, glycerine, lecithin, sodium chloride, carrageenan, calcium sulphate, citric acid, microbial enzymes, xanthan gum, disodium phosphate and sodium citrate. The Go Veggie! Mozzarella (http://www.galaxyfoods.com/) contains water, canola oil, modified potato starch, glycerine, maranta starch, tricalcium phosphate, pea protein, sodium chloride, aromas, rice maltodextrin, lactic acid, lecithin, xanthan gum, colorant and powder cellulose.

However, in general these alternatives have low protein content, and their organoleptic characteristics do not always completely satisfy the consumer, despite the fact that some of them are highly complex formulations.

Therefore, despite the different alternatives described to date, there remains the need to have a simple powder composition that allows to prepare dairy-free cheese and that has functional, organoleptic and nutritional characteristics comparable to those of traditional cheese prepared from milk.

### Object of the invention

The object of the present invention is a powder composition for preparing dairy-free cheese.

Another aspect of the invention is a package comprising said composition.

Another aspect of the invention is the use of said composition for preparing dairy-free cheese.

Another aspect of the invention is a process for preparing dairy-free cheese.

Another aspect of the present invention is dairy-free cheese comprising the composition of the invention.

Another aspect of the the invention is a food product comprising said dairy-free cheese.

### Description of the figures

Figure 1 Figure 1 shows a cross-section of a dairy-free cheese obtained with the composition of example 5.
Figure 2 Figure 2 shows the dairy-free cheese obtained with the composition of Example 5 once grated.
Figure 3 Figure 3 shows the appearance of the pizza obtained by putting on it grated dairy-free cheese obtained with the composition of example 5, wherein the pizza dough has been prepared according to the disclosure of the Spanish patent application P201631316, and has been baked according to a usual procedure.

### Detailed description of the invention

The object of the present invention is a powder composition for preparing dairy-free cheese comprising:
a) legume protein,
b) hydroxypropylated starch phosphate,
c) carrageenan,
d) locust bean gum,
e) tapioca flour, and
f) lactic acid.

The authors of the present invention have developed a composition that, surprisingly, allows preparing dairy-free cheese without the need to carry out a process of milk coagulation and separation of the whey, and with a high nutritional power because it allows the incorporation of a significant amount of legume protein to it. The combination of carrageenan, locust bean gum and hydroxypropylated starch phosphate also makes it possible to obtain organoleptic properties of the obtained cheese, which are comparable in terms of texture, melting and stretching to traditional cheese prepared from milk, as well as the inclusion of a high protein content, greater than 5.5% by weight based on the total weight of the cheese.

Throughout the present description, unless otherwise specified, the concentrations expressed as percentages always refer to the percentage weight/weight (w/w), that is, grams of a certain component per 100 g of composition, and the percentages of the different components of a composition are adjusted so that their sum is 100%. The term "approximately" refers to a deviation of plus/minus 10%, preferably plus/minus 5%.

In the present description, as well as in the claims, the singular forms "a", "an" and "the" include the plural reference unless the context clearly indicates otherwise.

In this description, dairy-free cheese is defined as a food product used as a substitute of cheese in which the milk has been completely replaced by other components of plant origin. Throughout the description, the term "cheese" means "dairy-free cheese".

### Legume protein

The composition of the invention allows the incorporation of a significant content of proteins, preferably legume protein.

The legume protein is usually selected from the group consisting of pea protein, soy protein, chickpea protein, lupine protein, and mixture thereof. The legume protein is generally used in powder form, so that it can be incorporated more easily into the composition of the invention.

Pea protein and/or soy protein are preferably included in the composition of the invention, more preferably pea protein.

These legume proteins are commercially available, for example, through companies such as Roquete, Norben, or Parchem.

In the composition of the invention, the content of legume protein is generally comprised between 30% and 70%, preferably between 40% and 60%, and more preferably between 45% and 55% by weight based on the total weight of the powder composition.

### Hydroxypropylated starch phosphate

In the composition of the invention, hydroxypropylated starch phosphate is used, which is a modified starch, to which the code E1442 is assigned as a food additive. The starch that is used for its preparation can be of natural origin, obtained from tapioca, rice or potato starch, or of synthetic origin, derived from transgenic maize starches; preferably is tapioca starch.

Said modified starch can be obtained commercially under the name C Polar Tex® 06741 through the company Cargill. Its preparation is described, for example, in the European patent application EP-A-0796868.

In the composition of the invention, the content of hydroxypropylated starch phosphate is generally comprised between 10% and 20%, preferably between 12% and 18%, and more preferably between 14% and 16% by weight based on the total weight of the powder composition.

### Carrageenan

Carrageenan is a hydrocolloid with a polysaccharide structure obtained by extraction with water or with an alkaline solution from certain marine red algae, such as, for example, *Chondrus crispus*, *Eucheuma Cottonii* and *Eucheuma spinosum.* This compound is used in pharmaceutical and food technology as a suspending agent and gelling agent, and has the code E407 as a food additive.

Carrageenan mainly consists of sulfuric esters of galactose and 3,6-anhydrogalactose copolymers in the form of potassium, sodium, calcium, magnesium and ammonium salt.

This thickener is available in the market through companies such as, for example, FMC, Sigma-Aldrich, or CP Kelco.

In the composition of the invention, the carrageenan content is generally comprised between 2% and 15%, preferably between 7% and 12%, and more preferably between 9% and 10% by weight based on the total weight of the powder composition.

### Locust bean gum

Locust bean gum is a vegetable gum extracted from carob tree seeds that mainly consists of a high molecular weight polysaccharide composed of D-galactose and D-mannose units combined through glycosidic bonds. Generally, the molecular weight is approximately 310000.

This product is used in pharmaceutical and food technology, and has the code E410 as a food additive.

Locust bean gum is available in the market through companies such as Cyber Colloids, Sigma-Aldrich, or Tic Gums.

In the composition of the invention, the content of locust bean gum is generally comprised between 0.1% and 6%, preferably between 0.5% and 3%, and more preferably between 1.0% and 2.0% by weight based on the total weight of the powder composition.

### Tapioca flour

Tapioca flour is a product made from the root of cassava, also called yucca, manioc or mandioca. This product substantially consists of starch, including small amounts of fats and proteins (generally less than 0.5% in both cases), and traces of mineral salts.

Tapioca flour is available in the market through companies such as Avebe, or National Starch.

In the composition of the invention, the content of tapioca flour is generally comprised between 1% and 10%, preferably between 2% and 8%, and more preferably between 4% and 6% by weight based on the total weight of the powder composition.

### Lactic acid

Lactic acid is 2-hydroxypropanoic acid. It can be obtained by lactic fermentation from carbohydrates such as lactose, glucose or sucrose in the presence of microorganisms such as *Bacillus acidi lactici.* On an industrial scale, corn starch, potatoes, or whey are used as a source of carbohydrates. It can also be obtained by chemical synthesis from ethanol or from acetaldehyde and carbon monoxide at a temperature comprised between 130° C and 200° C at high pressure.

It is a liquid that is used in pharmaceutical and food technology, and it has the code E270 as a food additive.

Lactic acid is available in the market through companies such as Purac, Parchem or Sigma-Aldrich.

In the composition of the invention lactic acid is also used to adjust the pH of the cheese to a value generally comprised between 5 and 6.5, preferably between 5.5 and 6.0, and more preferably at pH 5.8. The adjustment of the pH allows regulating the melting characteristics of the cheese.

In the composition of the invention, the lactic acid content is generally comprised between 0.5% and 10%, preferably between 1% and 7%, and more preferably between 2% and 3% by weight based on the total weight of the powder composition.

Other acids can also be used in the composition of the invention to adjust the pH, for example, citric acid, acetic acid or hydrochloric acid.

### Other components

In general, the composition of the invention additionally comprises at least one component selected from the group of sodium chloride, aroma, vitamins, minerals, colorants, and mixtures thereof.

The addition of sodium chloride to the composition makes it possible to adjust the taste of the final cheese. Although it can be added as a solution and sprayed on the other solid components, preferably sodium chloride in solid form is used.

The sodium chloride content is generally comprised between 3% and 15%, preferably between 5% and 12%, and more preferably between 8% and 10% by weight based on the total weight of the powder composition.

The composition of the invention may comprise an aroma or a combination of aromas to impart the desired organoleptic characteristics to the dairy-free cheese. For example, the aroma can be selected from the group consisting of cheese aroma, umami aroma, mustard aroma, garlic aroma, onion aroma, walnut aroma, species aroma, nutritional yeast aroma, and mixtures thereof. These aromas are commercially available in liquid or solid form. In the composition of the invention, they are preferably used in solid form. The liquid form can be transformed into solid by spraying it on a solid carrier such as, for example, maltodextrin, sucrose, or another vehicle suitable to be incorporated into food compositions.

The cheese aroma is a commercial product which confers on the cheese, obtained from the composition of the invention, the aroma of the desired cheese, for example, Cheddar, Gouda, Manchego, or Mozzarella. In the composition of the invention, solid cheese aroma is preferably employed. The cheese aroma in solid form is incorporated into vehicles such as, for example, maltodextrin or sucrose.

In a preferred embodiment, the composition of the invention comprises a mixture of cheese aroma and umami aroma, preferably in solid form. The content of cheese aroma in solid form is generally comprised between 2% and 10%, preferably between 3% and 8%, and more preferably between 4% and 6% by weight based on the total weight of the powder composition. The content of umami aroma in solid form is generally comprised between 0.2% and 5%, preferably between 0.5% and 3%, and more preferably between 1% and 2% by weight based on the total weight of the powder composition.

In a more preferred embodiment the composition also comprises mineral salts, more preferably calcium and magnesium salts, and vitamins, more preferably selected from the group consisting of vitamin K1, vitamin K2, vitamin D, vitamin D2, vitamin D3, vitamin B12, and mixtures thereof.

The calcium and magnesium salts are generally carbonate, bicarbonate, or chloride.

A colorant may also be incorporated into the powder composition to adjust the colour of the cheese to its natural colour. The colorant content is generally comprised between 0.001% and 1%, preferably between 0.01% and 0.5%, and still more preferably between 0.02% and 0.05% by weight based on the total weight of the powder composition.

In a preferred embodiment the powder composition consists essentially of:
a) legume protein, preferably pea protein,
b) hydroxypropylated starch phosphate,
c) carrageenan,
d) locust bean gum,
e) tapioca flour,
f) lactic acid, and
g) sodium chloride.

In a preferred embodiment, the composition further comprises at least one aroma, colorant, vitamins, and mineral salts.

In a preferred embodiment the composition of the invention comprises:
a) between 30% and 70%, preferably between 40% and 60%, and more preferably between 45% and 55% by weight based on the total weight of the composition, of legume protein, preferably pea protein,
b) between 10% and 20%, preferably between 12% and 18%, and more preferably between 14% and 16% by weight based on the total weight of the composition, of hydroxypropylated starch phosphate,
c) between 2% and 15%, preferably between 7% and 12%, and more preferably between 9% and 10% by weight based on the total weight of the composition, of carrageenan,
d) between 0.1% and 6.0%, preferably between 0.5% and 3.0%, and more preferably between 1.0% and 2.0% by weight based on the total weight of the composition, of locust bean gum,
e) between 1% and 10%, preferably between 2% and 8%, and more preferably between 4% and 6% by weight based on the total weight of the composition, of tapioca flour,
f) between 0.5% and 10%, preferably between 1% and 7%, and more preferably between 2% and 3% by weight based on the total weight of the composition, of lactic acid, and
g) between 3% and 15%, preferably between 5% and 12%, and more preferably between 8% and 10% by weight based on the total weight of the composition, of sodium chloride,
wherein the percentages of each of the components are adjusted to obtain 100%.

In a more preferred embodiment, the composition further comprises at least one aroma, colorant, vitamins, preferably selected from the group consisting of vitamin K1, vitamin K2, vitamin D, vitamin D2, vitamin D3, vitamin B12, or mixtures thereof, and mineral salts, preferably calcium and magnesium salts.

Another aspect of the invention is a package comprising the composition of the invention.

In an embodiment of the invention, the powder composition is presented in a bulk container, such as, for example, a wide-mouthed high-density polyethylene or glass pot, so that the quantity necessary for the preparation of the cheese is dosed by weighing or with a dosing dispenser.

In another embodiment of the invention, the powder composition is presented in the form of sachets, which already contain an amount suitable for the preparation of the cheese. These sachets can be made of paper or can be aluminium or plastic laminates.

In another embodiment, the package is a multilayer paper bag of variable size, for example, from 0.5 Kg to 25 Kg, and may even be higher.

### Process for preparing dairy-free cheese

Another aspect of the invention is the use of the composition for preparing dairy-free cheese.

Another aspect of the invention is a process for preparing dairy-free cheese.

A feature of the composition for preparing dairy-free cheese is that it is a powder composition that incorporates water and oil with great ease, allowing an easy elaboration of dairy-free cheese.

The process for preparing dairy-free cheese from the powder composition of the invention comprises the following steps:
1) weighing a certain amount of the composition of the invention,
2) adding water to the composition of the invention weighed in step 1),
3) homogenizing the mixture obtained in step 2),
4) adding vegetable oil to the mixture obtained in step 3),
5) homogenizing the mixture of step 4),
6) cooking the mixture obtained in step 5), and
7) pouring the mixture obtained in step 6) into moulds and
8) allowing to cool.

The cooling step of the mixture can be carried out in an area that is at room temperature, or in the refrigerator or in a freezer.

In order to prepare the dairy-free cheese from the powder composition of the invention, water and oil are added to a certain amount of this composition, in a weight ratio water:oil comprised between 2:1 and 3:1, preferably between 2.2:1 and 2.7:1, and still more preferably between 2.5:1. Generally approximately 300 g of water are added per 50 g of powder composition of the invention, it is homogenized at medium speed, and then approximately 120 g of vegetable oil are added and the mixture is homogenized at medium speed. The cooking is usually performed at medium heat for a period of time comprised between 3 and 15 minutes. Depending on the cooking time, a greater or lesser evaporation of water takes place, so that with this time the texture of the cheese can be regulated. The longer the cooking time, the greater the evaporation and the consistency of the cheese. By way of guidance, from the amounts indicated for 50 g of composition by weight, a dairy-free cheese with a weight of approximately 440 g can be prepared. In this way, using a composition of the invention with a content of legume protein of approximately 50%, it is possible to obtain a dairy-free cheese with a protein content of approximately 5.7% by weight, with a moisture of approximately 60% by weight.

The vegetable oil is usually selected from the group consisting of olive oil, sunflower oil, corn oil, coconut oil, palm oil, sesame oil, peanut oil, safflower oil, rapeseed oil, walnut oil, hazelnut oil, rice oil, grape seed oil, wheat germ oil, hemp oil, soybean oil, and mixtures thereof. Preferably it is selected from olive oil, sunflower oil and coconut oil, and still more preferably is sunflower oil.

Another aspect of the invention is a dairy-free cheese comprising the composition of the invention. In a preferred embodiment, the dairy-free cheese comprises between 10% and 15% by weight of the total weight of the cheese, of the composition of the invention, between 55% and 65% by weight of the total weight of the cheese, of water, and between 20% and 30% by weight of vegetable oil, wherein the percentages of each of the components are adjusted to obtain 100%.

Another aspect of the invention is a food product comprising said dairy-free cheese. The food product can be selected, for example, from grated cheese, shredded cheese, sliced cheese, cheese cream, diced cheese, sauce, and cheese for precooked pizza.

### Organoleptic properties

Melting capacity refers to the ability of the cheese to soften by heating until it becomes a melt dough that maintains cohesion.

Flowability refers to the flowing ability of a melted cheese.

Stretching ability refers to the ability of melted cheese to form cohesive fibres when stretched along an axis.

Surprisingly, despite its simplicity, the composition of the invention allows the preparation of dairy-free cheese, which does not comprise ingredients of animal origin, which has excellent functional, organoleptic and nutritional properties, standing out the good melting and stretching behaviour, comparable to that of a cheese prepared from milk. The dairy-free cheese is free of gluten, trans fats, cholesterol, nuts, and dairy products. This composition is characterized by its simplicity in terms of its components and by the ease of preparation of the cheese.

Furthermore, the composition of the invention has high protein content, greater than 5.5% by weight based on the total weight of the cheese, and in preferred embodiments also includes mineral salts and vitamins.

The preparation of dairy-free cheeses with such high protein content is the result of the combination of carrageenan, locust bean gum, and hydroxypropylated starch phosphate, which also allows the preparation of a dairy-free cheese with good texture, melting behaviour and stretching properties.

The invention includes the following embodiments:
1.- Powder composition for preparing dairy-free cheese, characterized in that it comprises:
   a) legume protein,
   b) hydroxypropylated starch phosphate,
   c) carrageenan,
   d) locust bean gum,
   e) tapioca flour, and
   f) lactic acid.
2.- Composition according to embodiment 1, characterized in that the legume protein is selected from the group consisting of pea protein, soy protein, chickpea protein, lupine protein, and mixture thereof.
3.- Composition according to embodiment 2, characterized in that the legume protein is pea protein and/or soy protein.
4.- Composition according to embodiment 3, characterized in that the legume protein is pea protein.
5.- Composition according to any of embodiments 1 to 4, characterized in that the content of legume protein is comprised between 30% and 70% by weight based on the total weight of the powder composition.
6.- Composition according to any of embodiments 1 to 5, characterized in that the hydroxypropylated starch phosphate is tapioca starch.
7.- Composition according to any of embodiments 1 to 6, characterized in that the content of hydroxypropylated starch phosphate is comprised between 10% and 20% by weight based on the total weight of the powder composition.
8.- Composition according to any of embodiments 1 to 7, characterized in that the content of carrageenan is comprised between 2% and 15% by weight based on the total weight of the powder composition.
9.- Composition according to any of embodiments 1 to 8, characterized in that the content of locust bean gum is comprised between 0.1% and 6% by weight based on the total weight of the powder composition.
10.- Composition according to any of embodiments 1 to 9, characterized in that the content of tapioca flour is comprised between 1% and 10% by weight based on the total weight of the powder composition.
11.- Composition according to any of embodiments 1 to 10, characterized in that the content of lactic acid is comprised between 0.5% and 10% by weight based on the total weight of the powder composition.
12.- Composition according to any of embodiments 1 to 11, characterized in that it additionally comprises at least one component selected from the group sodium chloride, aroma, vitamins, minerals, colorants, and mixtures thereof.
13.- Composition according to embodiment 12, characterized in that it comprises sodium chloride.
14.- Composition according to embodiment 13, characterized in that the content of sodium chloride is comprised between 3% and 15% by weight based on the total weight of the powder composition.
15.- Composition according to any of embodiments 12 to 14, characterized in that it comprises a combination of cheese aroma, umami aroma, mustard aroma, garlic aroma, onion aroma, walnut aroma, species aroma, nutritional yeast aroma, or mixtures thereof.
16.- Composition according to embodiment 15, characterized in that it comprises a combination of cheese aroma and umami aroma.
17.- Composition according to embodiment 16, characterized in that the combination of cheese aroma and umami aroma is in solid form.
18.- Composition according to embodiment 17, characterized in that the content of cheese aroma is comprised between 2% and 10% by weight based on the total weight of the powder composition, and the content of umami aroma is comprised between 0.2% and 5% by weight based on the total weight of the powder composition.
19.- Composition according to any of embodiments 12 to 18, characterized in that it comprises mineral salts and vitamins.
20.- Composition according to embodiment 19, characterized in that the mineral salts are calcium and magnesium salts.
21.- Composition according to embodiment 19 or 20, characterized in that the vitamins are selected from the group consisting of vitamin K1, vitamin K2, vitamin D, vitamin D2, vitamin D3, vitamin B12, and mixture thereof.
22.- Composition according to embodiment 1, characterized in that it comprises
   a) between 30% and 70% by weight based on the total weight of the composition, of legume protein,
   b) between 10% and 20% by weight based on the total weight of the composition, of hydroxypropylated starch phosphate,
   c) between 2% and 15% by weight based on the total weight of the composition, of carrageenan,
   d) between 0.1% and 6.0% by weight based on the total weight of the composition, of locust bean gum,
   e) between 1% and 10% by weight based on the total weight of the composition, of tapioca flour,
   f) between 0.5% and 10% by weight based on the total weight of the composition, of lactic acid, and
   g) between 3% and 15% by weight based on the total weight of the composition, of sodium chloride,
   wherein the percentages of each of the components are adjusted to obtain 100%.
23.- Composition according to embodiment 22, characterized in that the legume protein is pea protein.
24.- Composition according to embodiment 22 or 23, characterized in that it also comprises at least one aroma, colorant, vitamins, and mineral salts.
25.- Use of the composition of any of embodiments 1 to 24 for preparing dairy-free cheese.
26.- Package comprising the composition of any of embodiments 1 to 24.
27.- Process for preparing dairy-free cheese, characterized in that it comprises:
   1) weighing a certain amount of the composition of any of embodiments 1 to 24,
   2) adding water to the composition weighed in step 1),
   3) homogenizing the mixture of step 2),
   4) adding vegetable oil to the mixture obtained in step 3),
   5) homogenizing the mixture of step 4),
   6) cooking the mixture obtained in step 5), and
   7) pouring the mixture obtained in step 6) into moulds and
   8) allowing to cool.
28.- Dairy-free cheese comprising the composition of any of embodiments 1 to 24.
29.- Dairy-free cheese according to embodiment 28, characterized in that it comprises between 10% and 15% by weight based on the total weight of the cheese, of the composition of any of claims 1 to 24, between 55% and 65% by weight based on the total weight of the cheese, of water, and between 20% and 30% by weight of vegetable oil, wherein the percentages of each of the components are adjusted to obtain 100%.
30.- Food product comprising the dairy-free cheese of embodiments 28 or 29.
31.- Food product according to embodiment 30, characterized in that it is selected from the group consisting of grated cheese, shredded cheese, sliced cheese, cheese cream, diced cheese, sauce, and cheese for precooked pizza.

Hereunder, several examples are provided by way of illustration, but not limitation of the invention.

### Examples

### Examples 1 to 8: Preparation of dairy-free cheeses

Powder compositions containing the solid ingredients listed in Table I were prepared by simple mixing of the components, wherein the amounts express the percentage by weight of each of the ingredients based on the total composition:

**TABLE I**

| **Ingredient** / **Example** | **1** | **2** | **3** | **4** |
|---|---|---|---|---|
| Pea protein | 51.4 | 51.4 | 51.4 | 49.1 |
| Hydroxypropylated starch phosphate | 17.1 | 17.1 | 17.1 | 15.2 |
| Carrageenan | 4.3 | 7.1 | 5.7 | 9.4 |
| Tapioca flour | 5.7 | 5.7 | 5.7 | 5.1 |
| Lactic acid | 4.3 | 4.3 | 4.3 | 2.8 |
| Locust bean gum | 4.3 | 1.4 | 2.86 | 1.3 |
| Sodium chloride | 11.4 | 11.4 | 11.4 | 9.6 |
| Aromas, colorant, vitamins and mineral salts | q.s. 100 | q.s. 100 | q.s. 100 | q.s. 100 |
| | | | | |

| **Ingredient / Example** | **5** | **6** | **7** | **8** |
|---|---|---|---|---|
| Pea protein | 50.0 | 51.4 | 51.4 | 49.1 |
| Hydroxypropylated starch phosphate | 15.0 | 17.1 | 17.1 | 15.2 |
| Carrageenan | 9.3 | 2.9 | 8.45 | 8.3 |
| Tapioca flour | 5.0 | 5.7 | 5.7 | 5.1 |
| Lactic acid | 3.0 | 4.3 | 4.3 | 2.8 |
| Locust bean gum | 1.2 | 5.7 | 1.4 | 2.8 |
| Sodium chloride | 9.5 | 11.4 | 11.4 | 9.6 |
| Aromas, colorant, vitamins and mineral salts | q.s. 100 | q.s. 100 | q.s. 100 | q.s. 100 |

With each of the powder compositions described, dairy-free cheese was prepared according to the following procedure: 300 g of water were added to 50 g of the powder composition and beaten at medium speed to homogenize the mixture. Next, 120 g of vegetable oil, preferably sunflower oil, were added and beaten at medium speed to homogenize the mixture. The obtained mixture was then cooked at medium heat for approximately 4 minutes, the resulting dough was poured into a mould, and was allowed to cool to room temperature so that it solidified.

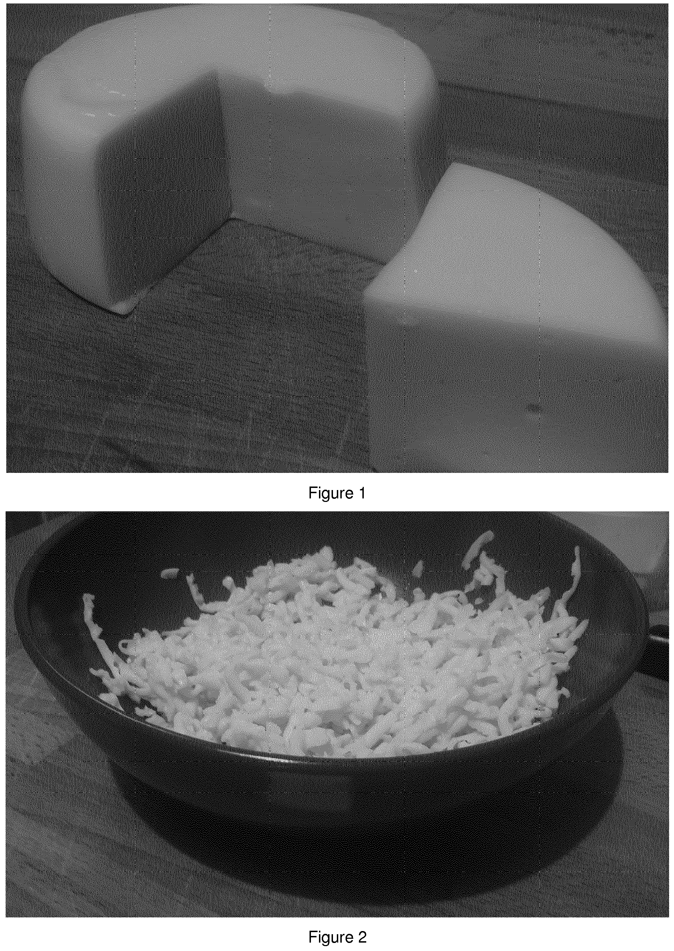

Figure 1 shows a cross-section of a dairy-free cheese obtained with the composition of example 5. In Figure 2 this grated cheese is shown.

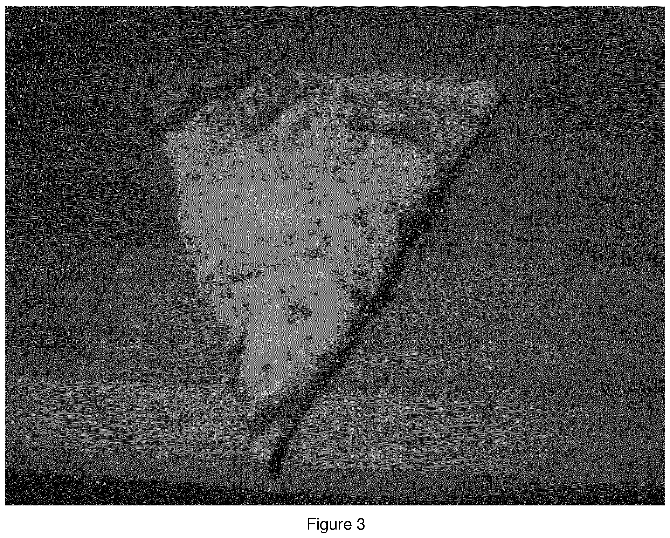

It was found that the cheese obtained with each of the compositions 1 to 8 had a texture comparable to a cheese prepared from milk, together with a good melting and stretching capacity comparable to a buffalo mozzarella cheese, and it had also high protein content, approximately 5.7% with a water content of approximately 60% by weight. The melting and stretching properties were clearly observed by placing the dairy-free cheese cut into strips on a pizza dough such that described in the Spanish patent application P201631316 and baked according to a usual procedure. Figure 3 shows the appearance of the pizza obtained by putting the grated dairy-free cheese obtained with the composition of example 5 on it.

## Claims

1. Powder composition for preparing dairy-free cheese, **characterized in that** it comprises:
a) legume protein,
b) hydroxypropylated starch phosphate,
c) carrageenan,
d) locust bean gum,
e) tapioca flour, and
f) lactic acid.

2. Composition according to claim 1, **characterized in that** the legume protein is pea protein and/or soy protein.

3. Composition according to any of claims 1 or 2, **characterized in that** the content of legume protein is comprised between 30% and 70% by weight based on the total weight of the powder composition.

4. Composition according to any of claims 1 to 3, **characterized in that** the content of hydroxypropylated starch phosphate is comprised between 10% and 20% by weight based on the total weight of the powder composition.

5. Composition according to any of claims 1 to 4, **characterized in that** the content of carrageenan is comprised between 2% and 15% by weight based on the total weight of the powder composition.

6. Composition according to any of claims 1 to 5, **characterized in that** the content of locust bean gum is comprised between 0.1% and 6% by weight based on the total weight of the powder composition.

7. Composition according to any of claims 1 to 6, **characterized in that** the content of tapioca flour is comprised between 1% and 10% by weight based on the total weight of the powder composition.

8. Composition according to any of claims 1 to 7, **characterized in that** the content of lactic acid is comprised between 0.5% and 10% by weight based on the total weight of the powder composition.

9. Composition according to any of claims 1 to 8, **characterized in that** it additionally comprises at least one component selected from the group sodium chloride, aroma, vitamins, minerals, colorants, and mixtures thereof.

10. Composition according to claim 1, **characterized in that** it comprises
a) between 30% and 70% by weight based on the total weight of the composition, of legume protein,
b) between 10% and 20% by weight based on the total weight of the composition, of hydroxypropylated starch phosphate,
c) between 2% and 15% by weight based on the total weight of the composition, of carrageenan,
d) between 0.1% and 6.0% by weight based on the total weight of the composition, of locust bean gum,
e) between 1% and 10% by weight based on the total weight of the composition, of tapioca flour,
f) between 0.5% and 10% by weight based on the total weight of the composition, of lactic acid, and
g) between 3% and 15% by weight based on the total weight of the composition, of sodium chloride,
wherein the percentages of each of the components are adjusted to obtain 100%.

11. Composition according to claim 10, **characterized in that** it also comprises at least one aroma, colorant, vitamins, and mineral salts.

12. Use of the composition of any of claims 1 to 11 for preparing dairy-free cheese.

13. Package comprising the composition of any of claims 1 to 11.

14. Process for preparing dairy-free cheese, **characterized in that** it comprises:
1) weighing a certain amount of the composition of any of claims 1 to 11,
2) adding water to the composition weighed in step 1),
3) homogenizing the mixture of step 2),
4) adding vegetable oil to the mixture obtained in step 3),
5) homogenizing the mixture of step 4),
6) cooking the mixture obtained in step 5), and
7) pouring the mixture obtained in step 6) into moulds and
8) allowing to cool.

15. Dairy-free cheese comprising the composition of any of claims 1 to 11.

16. Food product comprising the dairy-free cheese of claim 15.
